# EUROPEAN PATENT APPLICATION

(11) **EP 1 168 672 A2**
(43) Date of publication of application: **02.01.2002**
(21) Application number: 01112843.6
(22) Date of filing: 30.05.2001
(51) Int. Cl.: H04B 7/204

(54) **Multiple satellite beam laydown with switchable bands for hopped satellite downlink**

(30) Priority: 21.06.2000 US 599039
(71) Applicant: TRW Inc., Redondo Beach, California 90278 (US)
(72) Inventor: Berger, Harvey L., Redondo Beach, CA 90278 (US); Linsky, Stuart T., San Pedro, CA 90732 (US); Nivens, Dennis A., Hermosa Beach, CA 90254 (US); Harmon, Garrick J., Redondo Beach, CA 90278 (US); Tramm, Fred C., Rancho Palos Verdes, CA 90275 (US); White, Robert W., Playa del Rey, CA 90293 (US)
(74) Representative: Schmidt, Steffen J., Dipl.-Ing.

(57) **Abstract**

A multiple satellite beam laydown (600) includes an assignment of first-satellite spot beams to cells (502, 504, 506) covering a service region. Each first-satellite spot beam is assigned a color selected from a predetermined set of beam colors 400. The beam laydown (600) further includes a contemporaneous assignment of second-satellite spot beams to the cells (502, 504, 506). Each second-satellite spot beam has a color selected from the same set of beam colors (400). The second assignment is coordinated with the first assignment to maintain at least one type of interference (e.g., co-channel, adjacent channel, or cross polarization) below a predetermined threshold.

## Description

### BACKGROUND OF THE INVENTION

The present invention relates to beam laydowns for multiple beam satellites. In particular, the present invention relates to beam laydowns and a method and apparatus for directing the downlink beams of multiple satellites to cover a common service region with minimal interference.

Satellites have long been used to provide communication capabilities on a global scale. Typically, a satellite includes multiple uplink and downlink antennas, each of which provides communication bandwidth to a large service region using multiple spot beams. The area covered by a spot beam is commonly referred to as a cell, and color coded spot beams are assigned in a pattern called a laydown to cover the service region.

Spot beams are distinguished from one another by such characteristics as frequency or polarization. Each unique combination of spot beam characteristics is referred to as a color. These characteristics allow the spot beams in an appropriately designed laydown to operate without substantial cross channel, co-channel, or cross polarization interference. A set of spot beams having identical characteristics are said to be of the same color, while spot beams having different characteristics are said to be of different colors.

Each spot beam provides limited bandwidth. As a result, increased throughput demands in a cell can be accommodated only to a certain extent. Such increases may arise, for example, to accommodate new subscribers in a satellite television network, or to increase the throughput of existing subscribers.

In general, however, past satellites and beam laydowns were not designed to address the need for additional bandwidth in each cell. Although one possibility is to design, build, and launch a new satellite with higher bandwidth beams, such an approach is extremely wasteful, both in terms of the prior satellite (which might simply be deactivated) and the time and cost required to put the new satellite into service.

On the other hand, if the original satellite is kept operational, a substantial challenge arises in supporting additional spot beams for cells in the same laydown. This challenge arises in part because the spot beams in the laydown have preset colors. In other words, there were no provisions made in prior systems to coordinate with the original satellite so that accommodate additional spot beams may be accommodated in order to meet the increased bandwidth demands for each cell while maintaining acceptably low cross channel, co-channel, and cross polarization interference.

A need exists for a beam laydown implementation that addresses the problems noted above and others previously experienced.

### BRIEF SUMMARY OF THE INVENTION

A preferred embodiment of the present invention provides a multiple satellite beam laydown. The laydown includes an assignment of first-satellite spot beams to cells covering a service region. Each first-satellite spot beam is assigned a color selected from a predetermined set of beam colors. The laydown further includes a contemporaneous assignment of second-satellite spot beams to the cells. Each second-satellite spot beam has a color selected from the same set of beam colors. The second assignment is coordinated with the first assignment to maintain at least one type of interference (e.g., co-channel, adjacent channel, or cross polarization) below a predetermined threshold.

Another preferred embodiment of the present invention provides a bandwidth switch. The bandwidth switch includes a waveform processing chain that attributes one of a set of beam colors to transmit data in accordance with a color selection signal. The bandwidth switch further includes a beam color controller coupled to the waveform processing chain through a color selection output. The beam color controller outputs a first beam color selection signal when a first bandwidth provider (e.g., a satellite) is providing bandwidth to a predetermined cell. The beam color controller outputs a second beam color selection signal when a second bandwidth provider (e.g., a subsequently launched satellite) also provides bandwidth to the predetermined cell.

### BRIEF DESCRIPTION OF THE DRAWINGS

Figure 1 illustrates a block diagram of a bandwidth switch with waveform processing chain.
Figure 2 shows a detailed block diagram of a bandwidth switch with waveform processing chain.
Figure 3 depicts a flow diagram of a method for coordinating assignments of spot beam colors to cells in a service area for a first satellite and a second satellite.
Figure 4 shows an exemplary set of eight beam colors with definition notation.
Figures 5-14 illustrate beam laydowns for single-satellite and dual satellite coverage of a service area.

### DETAILED DESCRIPTION OF THE INVENTION

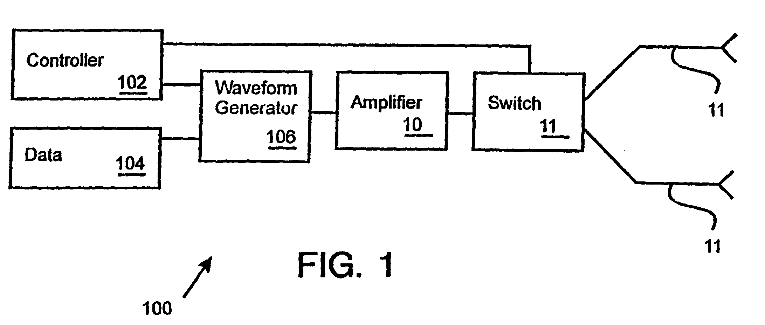

Turning now to Figure 1, that figure shows a block diagram of a bandwidth switch 100. The bandwidth switch 100 includes a controller 102 and a waveform processing chain that operates on data provided by the data source 104. In particular, the waveform processing chain includes a waveform generator 106, an amplifier 108, and a feed switch 110. The waveform processing chain further includes a first feed path 112 and a second feed path 114.

The first feed path 112 and the second feed path 114 may, for example, connect to individual antenna feed horns to direct spot beam coverage to distinct terrestrial cells. The feed paths 112-114 may also be characterized by a polarization effect on the waveform that propagates along the feed paths 112-114, including clockwise or counter clockwise polarization.

The waveform generator 106 accepts baseband data from the data source 104 and creates a waveform to be transmitted (after amplification by the amplifier 108). The switch 110 selects the particular feed path 112-114 along which the waveform propagates (and thus, in certain embodiments, the polarization and/or beam hop location associated with the waveform).

The controller 102 exercises color control over the waveform to be transmitted. Thus, the controller 102 may output one or more control signals (collectively referred to as a color selection signal) that determine, for example, the frequency, polarization, or hop location of the waveform to be transmitted. More particularly, as explained below, the controller 102 may adapt the color of the waveform to be transmitted in order to reduce interference in response to an additional bandwidth provider contemporaneously providing bandwidth for a common terrestrial cell.

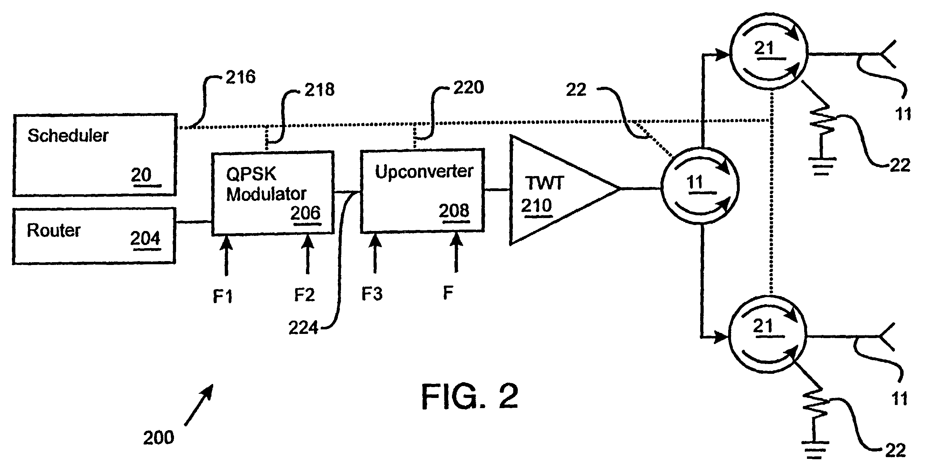

With regard to Figure 2, a more specific implementation of a bandwidth switch 200 is shown. The bandwidth switch 200 includes a data scheduler 202, a data router 204, and a waveform processing chain including a QPSK modulator 206, an upconverter 208, and a traveling wave tube amplifier (TWTA) 210. The switch 110 is illustrated in Figure 2 as a ferrite switch 110 that directs the waveform to be transmitted through either the first feed path 112 or the second feed path 114. Preferably, additional ferrite switches 212 and 214 in the feed paths 112-114 provide additional signal isolation (e.g., approximately 20db between input and output when the ferrite switch is off). The additional ferrite switches 212-214 operate under control of the color selection output to pass or block a waveform to be transmitted through the feed paths 112-114. In other words, when the waveform to be transmitted is destined for the feed 112, then the ferrite switch 214 is coupled through the load 228 to ground. Similarly, when the waveform to be transmitted is destined for the feed 114, then the ferrite switch 212 is coupled through the load 226 to ground.

In addition, Figure 2 shows a color selection output 216, two frequency selection inputs 218 and 220, a feed path selection input 222, and an intermediate waveform output 224.

During operation, the bandwidth switch 200 accepts baseband data from the router 204 (e.g., an ATM cell router), and creates a waveform to be transmitted using the waveform processing chain. The scheduler 202 monitors the propagation of data through the waveform processing chain and determines the color of the waveform to be transmitted. To that end, the scheduler 202 provides the color selection output 216 that indicates, as examples, the frequency, polarization, and hop location for the waveform to be transmitted.

The waveform processing starts by directly converting baseband I and Q data to an intermediate frequency of, for example, 750 MHz. The waveform processing then selects one of F1 (e.g., 3.175 MHz) or F2 (e.g., 3.425) and one of F3 (e.g., 16 GHz) or F4 (e.g., 17.4 GHz) to produce a waveform to be transmitted with a final center frequency at one of 18.425 GHz, 18.675 GHz, 19.825 GHz, or 20.075 GHz. Thus, the QPSK modulator 206 and the upconverter 208 include frequency selection inputs 218-220.

Note that the upconverter 208 is not present when the QPSK modulator 206 is a direct modulator that produces the waveform to be transmitted at the desired transmit frequency. As a direct modulator, the frequency selection input 218 selects between F1 and F2 (and optionally additional frequencies) at which to output the waveform to be transmitted.

The TWTA 210 amplifies the waveform to be transmitted, while the switch 110 determines along which feed path 112-114 (or additional feed paths) the amplified waveform will propagate. To that end, the switch 110 includes the feed path selection input 222 responsive to information on the color selection output 216. Because the feed paths 112-114 are generally (though not necessarily) associated with feed horns that produce spot beams in different hop locations, the feed path selection input acts to determine the hop location color component of the waveform to be transmitted. In addition, either of the feed paths 112-114 may be characterized by a polarization effect on the waveform that propagates along the feed path. Thus, the color selection output 216 may also determine the polarization color component of the waveform to be transmitted. Optionally, however, separate feed paths may be provided for desired combinations of polarization and hop location. The transmitted waveform manifests itself as a beam spot that, typically, provides bandwidth for a terrestrial cell.

The bandwidth switch 200 may operate onboard a first satellite that supports a cellular coverage area using a set of spot beams. The scheduler 202 ensures that the waveforms to be transmitted have the appropriate beam colors to minimize co-channel, adjacent channel, and cross polarization for the cellular coverage area and the eight possible beam colors. However, when, for example, a second subsequently launched satellite begins to provide bandwidth support for the same cellular coverage area, the bandwidth switch 200 allows the first satellite to modify its beam colors to accommodate the second satellite. In other words, the bandwidth switch 200 allows the first and second assignment of spot beams to the coverage area to coexist in a minimally interfering manner. The resultant beam laydown may then be minimally interfering initially for a single satellite, and later reconfigured to be minimally interfering with regard to a particular type of interference or interferences for additional satellites providing bandwidth for the same coverage area.

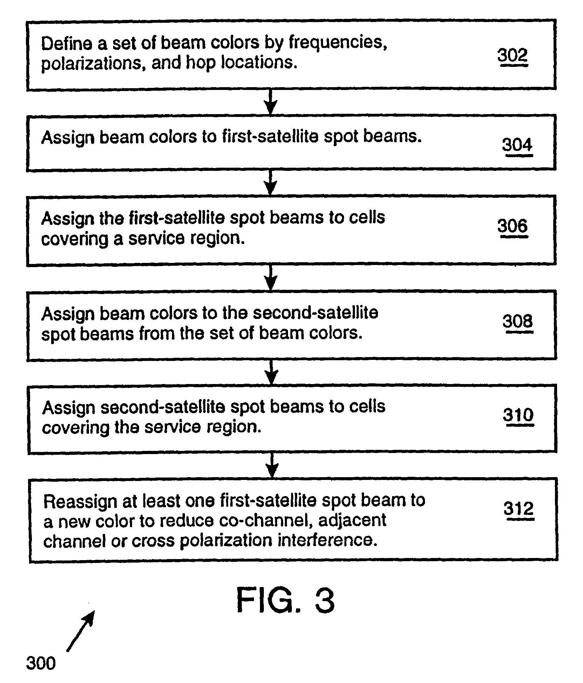

Figure 3 summarizes ,in the flow diagram 300, the steps explained above. At step 302 the system defines a set of beam colors, for example using frequency, hop location, and polarization color components. Next, the system assigns beam colors to first-satellite spot beams (step 304) and assigns the spot beams to cells defining a coverage area (step 306). The system may operate with a single satellite for any given period of time.

However, when an additional bandwidth provider (e.g., a second satellite) becomes available, the system accommodates the second set of spot beams. In particular, the system assigns beam colors to the second-satellite spot beams (step 308) and assigns the spot beams to the cells defining the coverage area (step 310). In addition, at step 312 the system reassigns at least one first-satellite spot beam to a different color, using, for example, the bandwidth switch described above. As will be shown below, the transition of beam colors from a one-satellite beam laydown to a two satellite beam laydown generally moves forward with the goal of minimizing a combination of co-channel, adjacent channel and/or cross polarization interference.

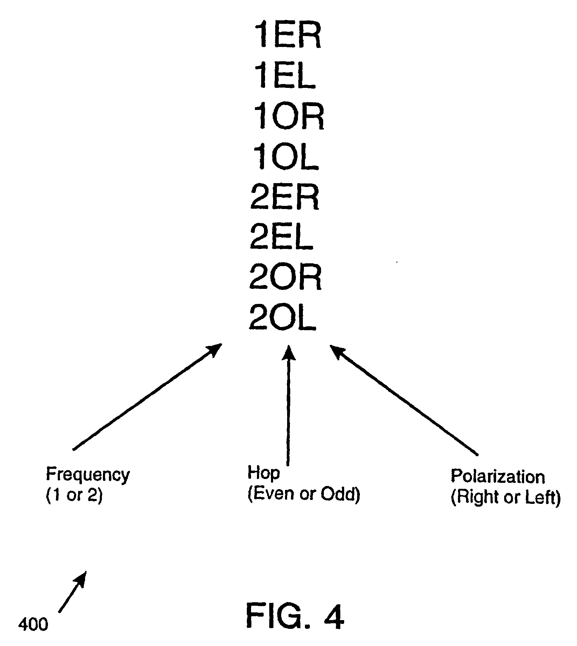

In the examples of beam laydowns provided below, it is assumed that the beam color components include two frequencies 1 and 2, two hop locations Even and Odd, and two polarizations Left and Right. The hop locations below are designated Even or Odd, but are not restricted to even or odd frames. Instead Even and Odd generally designate mutually exclusive time periods. There may, however, be additional or fewer beam color components of each type (e.g., N hop locations in general). Figure 4 provides a beam color chart 400 that summarizes the eight possible color combinations given two frequencies, two hop locations, and two polarizations. It is noted that the hop locations Even and Odd may either be mutually exclusive or non-mutually exclusive. When the hop locations are mutually exclusive, at any given time either the Even hop locations are receiving spot beam energy or the Odd hop locations are receiving spot beam energy, but not both.

On the other hand, when the hop locations are not mutually exclusive, both the Even and Odd hop locations may be receiving spot beam energy simultaneously. In general, the percentage amount of time that a waveform processing chain provides energy to an Even hop location versus an Odd hop location is programmable from 0 - 100 %. Thus, a hop location with greater bandwidth demands than the complementary hop location may receive spot beam energy a greater percentage of time.

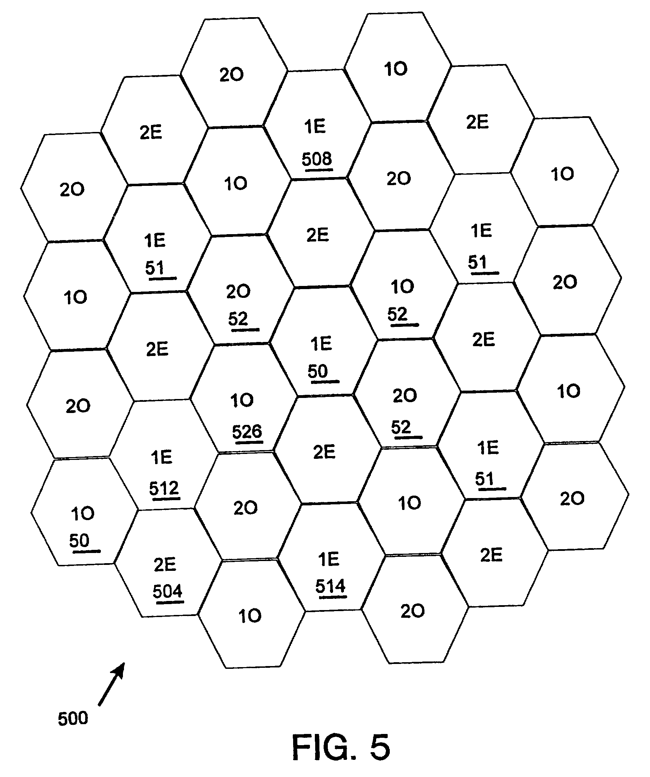

Figures 5-14 provide exemplary beam laydowns for one and two satellite coverage scenarios using the set of beam colors shown in Figure 4. Turning first to Figure 5, that figures illustrates a beam laydown 500 for a single satellite. The coverage area is generally divided into cells, for example, as shown in idealized form by the hexagonal cells 502 and 504. Each of the cells is also labeled with a beam color. For example, a beam of color 10L provides bandwidth for the cell 502, while a beam of color 2EL provides bandwidth for the cell 504.

The laydown 500 is characterized in that, for mutually exclusive hop locations, only six cochannel interferers (CCI) (caused by a beam of the same color), zero adjacent channel interferers (ACI) (caused by an adjacent beam differing only in frequency), and zero cross polarization interferers (XPI) (caused by an adjacent beam differing only in polarization) exist for any given cell. In other words, taking cell 506 (color 1ER) as an example, the CCIs are cells 508, 510, 512, 514, 516, and 518. Note that cell 520 does not provide CCI because it has an Odd color component and is not provided with spot beam energy at the same time as the cell 506 (color 1ER) (i.e., the hop locations are mutually exclusive). The laydown 500 also provides minimal interference when hop locations are non-mutually exclusive. In the non-mutually exclusive case, there exist only 6 CCIs, 2 ACIs, and 2 XPIs. The ACIs are cells 522 and 524, while the XPIs are cells 520 and 526. Note that not all colors (e.g., 20L) need be used.

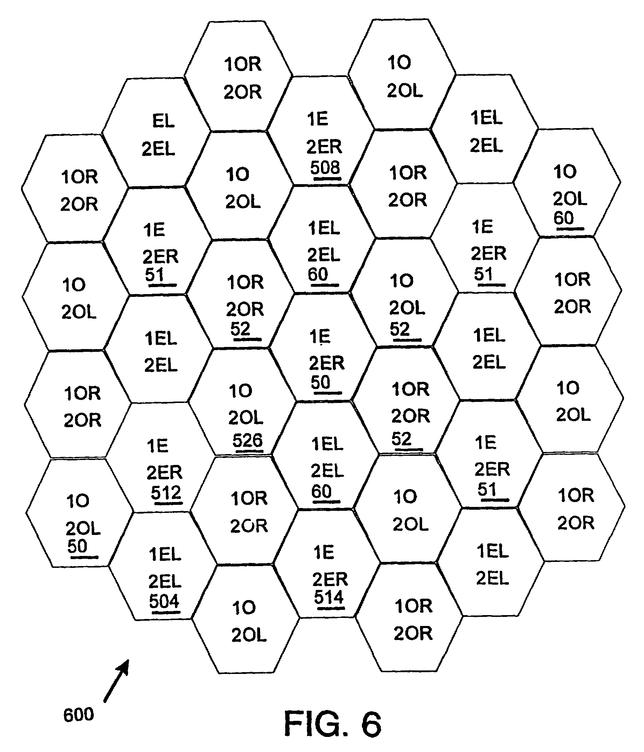

With regard to Figure 6, a new laydown 600 is provided that accommodates the assignment of first-satellite spot beams with an assignment of second-satellite spot beam covering the same coverage area in a manner that minimizes interference. Thus, in Figure 6, each cell is shown with a first color label for the beam spot generated by the first satellite, and a second color label for the beam spot generated by the second satellite for the same cell. As an example, a beam of color 10L from one satellite and a beam of color 20L from the second satellite both provide bandwidth for the cell 602.

The laydown 600, assuming mutually exclusive hop locations, has only 6 CCIs, 1 ACI, and 2 XPIs. Thus, the cell 506 continues to have cells 508-518 as CCIs, while cells 604 and 606 generate XPI, and cell 506 itself is the source of ACI (between the first satellite spot beam of color 1ER and the second satellite spot beam of color 2ER).

Note that with the bandwidth switch discussed above, the first satellite when launched may operate in accordance with the minimally interfering laydown 500. Subsequently, when a second satellite is launched, a bandwidth switch (either on the first satellite or second satellite) may reconfigure beam colors to achieve the minimally interfering laydown 600 for two satellites. The beam laydowns may, of course, be designed for minimal interference given additional satellites and additional (or fewer) spot beam colors.

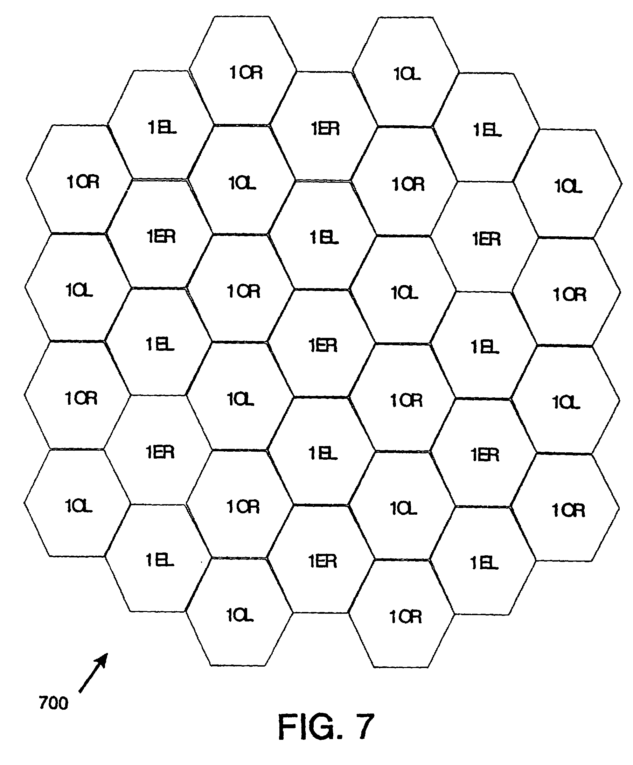

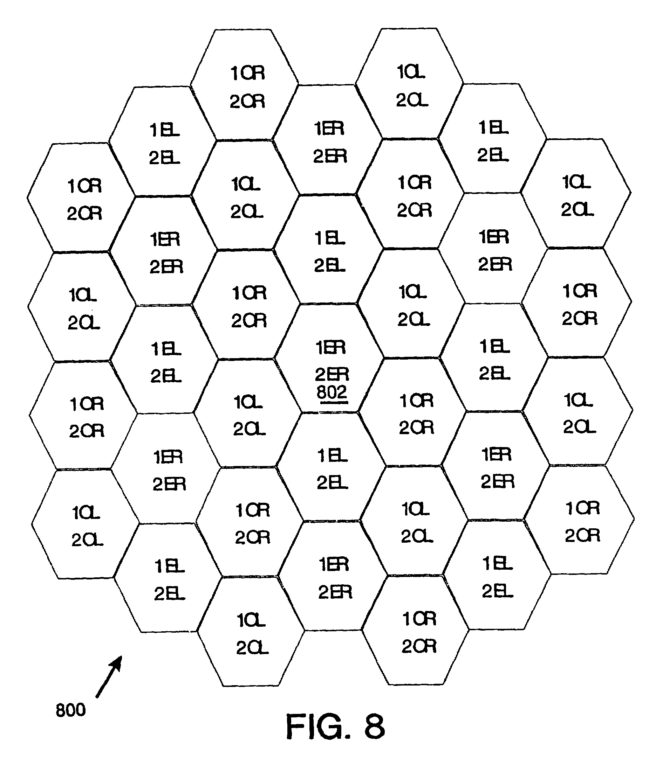

Another exemplary laydown is shown in Figure 7 as the beam laydown 700. Note that every cell in the laydown 700 shares a common beam color component, namely frequency. Regardless, the laydown 700 minimizes interference under this constraint such that there are only 6 CCIs, zero ACIs, and two XPIs. One advantage of the laydown 700 is that the ground terminals need only include the capability to receive a single frequency. In addition, no transmit frequency change is required for two-satellite operation (illustrated in Figure 8).

Figure 8 shows a laydown 800 in which a contemporaneous assignment of spot beams to the coverage area is made for a second satellite. For example, in cell 802, the first satellite provides bandwidth with a 1ER beam color while the second satellite provides bandwidth with a 2ER beam color. The laydown 800 minimizes interference in that at worst, only six CCIs, 1 ACI (from the same cell 802), and two XPIs exist for each cell.

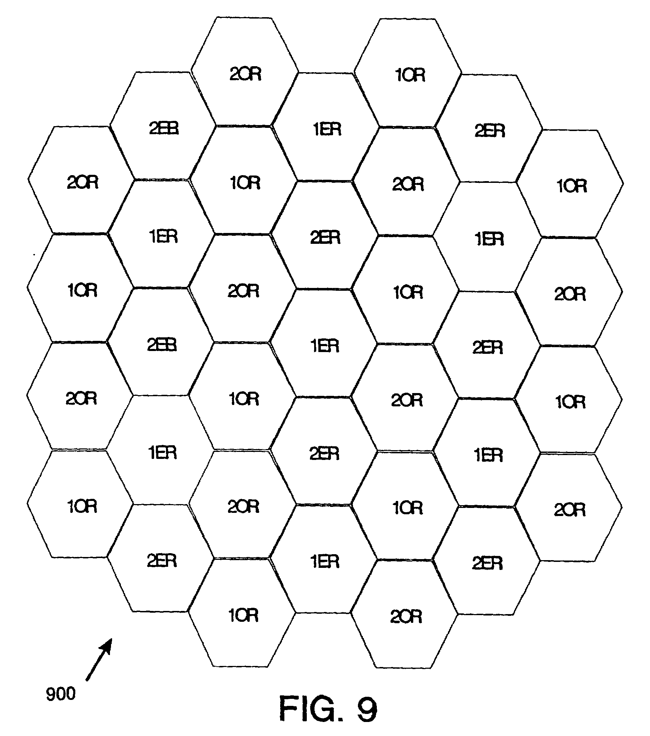

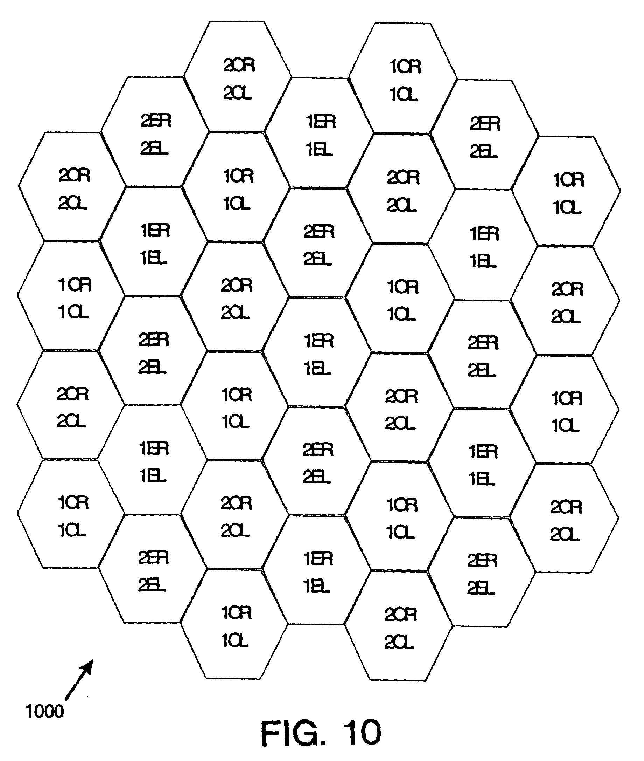

In a similar vein, Figure 9 shows a laydown 900 in which the first satellite provides beam colors that share a common polarization beam color component. In the laydown 900, there are at worst six CCIs, 2 ACIs, and zero XPIs. The corresponding two-satellite laydown is shown in Figure 10 as the laydown 1000. The laydown 1000 provides, for the two-satellite case, a minimum of 6 CCIs, 2 ACIs, and 1 XPI.

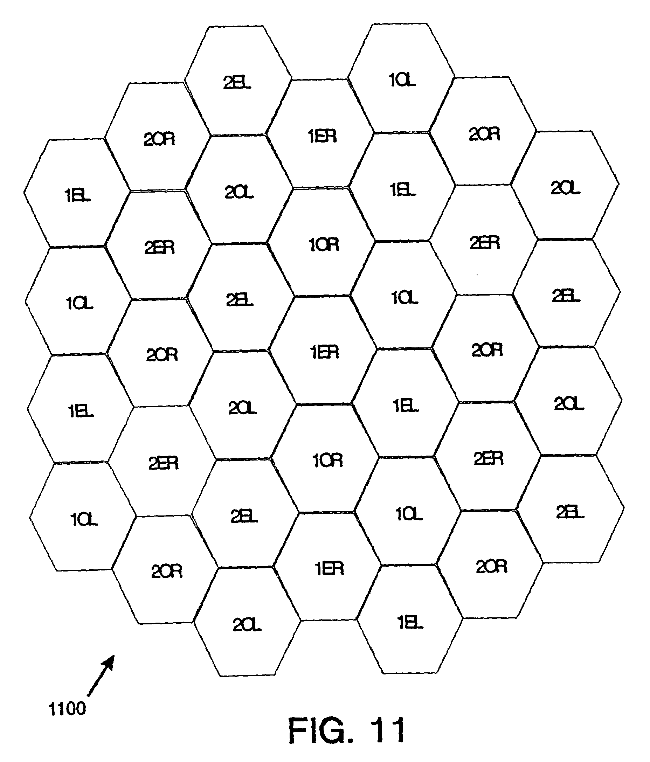

Although a laydown need not include every possible beam color, it is certainly possible that a laydown may include all possible beam colors. As an example, Figure 11 shows a laydown 1100 that uses all eight beam colors defined in Figure 4. The laydown 1100 reduces CCIs to two, ACIs to zero, and XPIs to one, but is not as readily adaptable to non-mutually exclusive hop locations as the laydown 500.

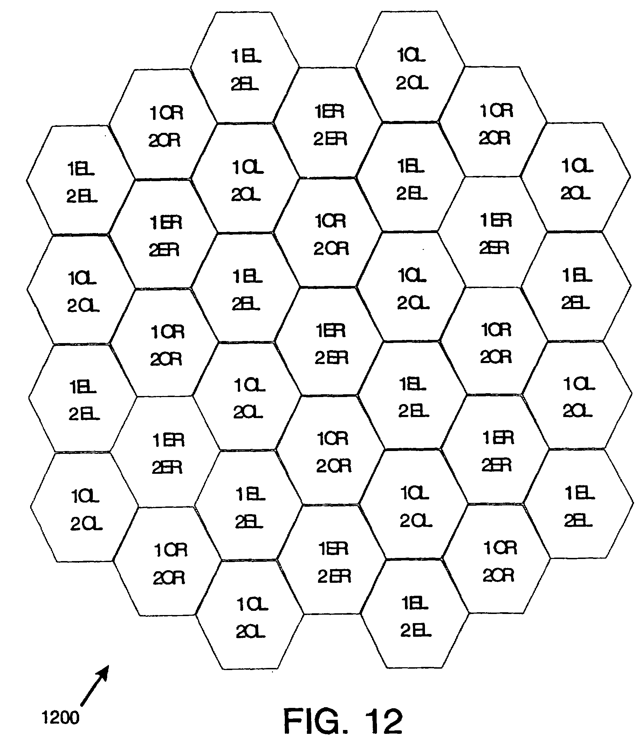

The eight beam color laydown 1100 may be extended to a two-satellite case. Figure 12 shows the corresponding two-satellite laydown 1200. Using mutually exclusive hop locations, there are at worst 6 CCIs, 1 ACI, and 2 XPIs.

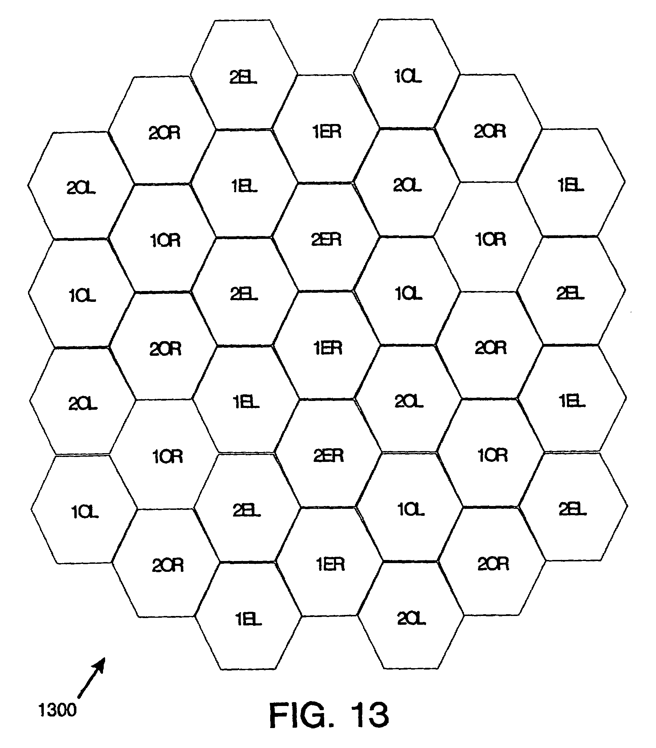

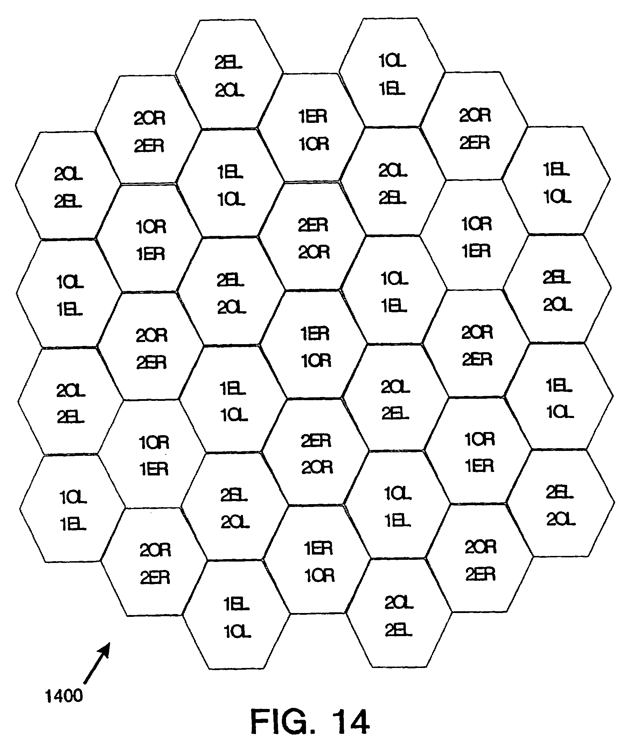

Turning next to Figure 13, an alternative laydown 1300 is shown. The laydown 1300, assuming mutually exclusive hop locations, reduces CCIs to two, ACIs to two, and XPI to one. As an added benefit, the laydown 1300 supports non-mutually exclusive hop locations resulting in only 6 CCIs, 2 ACIs, and 2 XPIs. The corresponding two satellite laydown is shown in Figure 14 as the laydown 1400 in which each cell has, at worst, 6 CCIs, 2 ACIs, and 2 XPIs.

Note that the laydown 1400 provides bandwidth from the first satellite and the second satellite in each cell at the same frequency. Thus, the downlink data rate to a terminal in a cell is potentially doubled when the satellites can synchronize their payload delivery in time.

While the invention has been described with reference to a preferred embodiment, it will be understood by those skilled in the art that various changes may be made and equivalents may be substituted without departing from the scope of the invention. In addition, many modifications may be made to adapt a particular step, structure, or material to the teachings of the invention without departing from its scope. Therefore, it is intended that the invention not be limited to the particular embodiment disclosed, but that the invention will include all embodiments falling within the scope of the appended claims.

## Claims

1. A multiple satellite beam laydown comprising:
a first assignment of first-satellite spot beams to cells covering a service region, each first-satellite spot beam having a color selected from a set of beam colors; and
a contemporaneous second assignment of second-satellite spot beams to the cells, each second-satellite spot beam having a color selected from the set of beam colors;
the second assignment coordinated with the first assignment to maintain at least one type of interference below a predetermined threshold.

2. The beam laydown of claim 1, wherein the first satellite spot beams have no colors in common with the second satellite spot beams.

3. The beam laydown of claim 1, wherein the beam colors are combinations of at least frequency and polarization.

4. The beam laydown of claim 3, wherein the beam colors are combinations of at least frequency, polarization and hop location.

5. The beam laydown of claim 3, wherein the first satellite spot beam colors share a first frequency, and wherein the second satellite spot beam colors share a second frequency different than the first frequency.

6. The beam laydown of claim 3, wherein the first satellite spot beam colors and the second satellite spot beam colors share a common frequency in each cell.

7. The beam laydown of claim 3, wherein the first satellite spot beam colors and the second satellite spot beam colors share a common frequency and a common polarization in each cell.

8. The beam laydown of claim 4, wherein the beam colors are combinations of at least two frequencies, at least two polarizations, and at least two hop locations.

9. The beam laydown of claim 1, wherein the beam colors include at least two mutually exclusive hop locations.

10. The beam laydown of claim 1, wherein the first assignment and the second assignment minimize at least one of co-channel, adjacent channel, and cross polarization interference between cells.

11. A method for coordinating a first assignment of spot beams to cells of a coverage area with a second assignment of spot beams to the coverage area, the method comprising:
defining a set of beam colors;
assigning beam colors from the set of beam colors to a set of first-satellite spot beams;
assigning the first-satellite spot beams to cells covering a service region; and
accommodating a subsequent set of second-satellite spot beams for the service region by:
assigning beam colors from the set of beam colors to a set of second-satellite spot beams;
assigning the second-satellite spot beams to the cells; and
reassigning at least one first-satellite spot beam to a new color to reduce interference.

12. The method of claim 11, wherein defining comprises defining a set of beam colors based on at least frequency and polarization.

13. The method of claim 11, wherein defining comprises defining a set of beam colors based on at least frequency, hop location, and polarization.

14. The method of claim 11, wherein the step of reassigning comprises reassigning the selected first-satellite beam to reduce at least one of adjacent channel, co-channel, and cross polarization interference.

15. The method of claim 11, wherein reassigning comprises reassigning selected first-satellite spot beams so that each first-satellite beam shares a common first frequency, and wherein the step of assigning a beam color to the second-satellite spot beams comprises assigning a beam color of a second common frequency to each of the second-satellite spot beams.

16. The method of claim 11, wherein the step of defining comprises defining a set of beam colors including mutually exclusive hop locations.

17. The method of claim 11, wherein:
the step of defining the set of beam colors comprises defining the set of beam colors based on non-mutually exclusive hop locations; and
the step of accommodating further comprises redefining the set of beam colors based on mutually exclusive hop locations.

18. A bandwidth switch comprising:
a waveform processing chain attributing one of a set of beam colors to transmit data in accordance with a beam color selection signal;
a beam color controller coupled to the waveform processing chain through a color selection output, the beam color controller outputting a first beam color selection signal when a first bandwidth provider is providing bandwidth to a predetermined terrestrial cell, and outputting a second beam color selection signal when a second bandwidth provider also provides bandwidth to the predetermined terrestrial cell.

19. The bandwidth switch of claim 18, wherein the waveform generator includes a direct frequency modulator.

20. The bandwidth switch of claim 18, wherein the waveform generator includes a modulator coupled to an upconverter.

21. The bandwidth switch of claim 18, wherein the waveform generator includes a power amplifier.
